# EUROPEAN PATENT APPLICATION

(11) **EP 4 804 688 A1**
(43) Date of publication of application: **09.09.2026**
(21) Application number: 24886351.6
(22) Date of filing: 01.11.2024
(51) Int. Cl.: H04W 72/23, H04W 72/1268, H04W 8/24, H04L 5/00, H04W 72/0453

(54) **METHOD AND DEVICE FOR TRANSMITTING AND RECEIVING SIGNALS IN WIRELESS COMMUNICATION SYSTEM**

(30) Priority: 02.11.2023 US 202363546935 P
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR)
(74) Representative: Maikowski & Ninnemann Patentanwälte Partnerschaft mbB
(86) International application number: PCT/KR2024/017044
(87) International publication number: WO 2025/095680

(57) **Abstract**

A method and a device for transmitting and receiving signals in a wireless communication system, disclosed in the present specification, trigger uplink switching for uplink transmission between at least three uplink bands. Specifically, the length and location of a switching gap when one of the at least three uplink bands is disabled are determined.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving reference signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, a method performed by a user equipment (UE) in a wireless communication system is provided, including configuring at least three uplink (UL) bands; and performing UL transmissions in all or some of the at least three UL bands. UL switching is triggered based on the UL transmissions, and a UL transmission is dropped during a UL switching gap associated with the UL switching. Based on specific band(s) among the at least three UL bands being deactivated, a length of the switching gap of the UL switching is determined as a length of a longest switching period among switching periods of respective band pairs reported as a UE capability, excluding switching period(s) associated with the specific band(s).

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

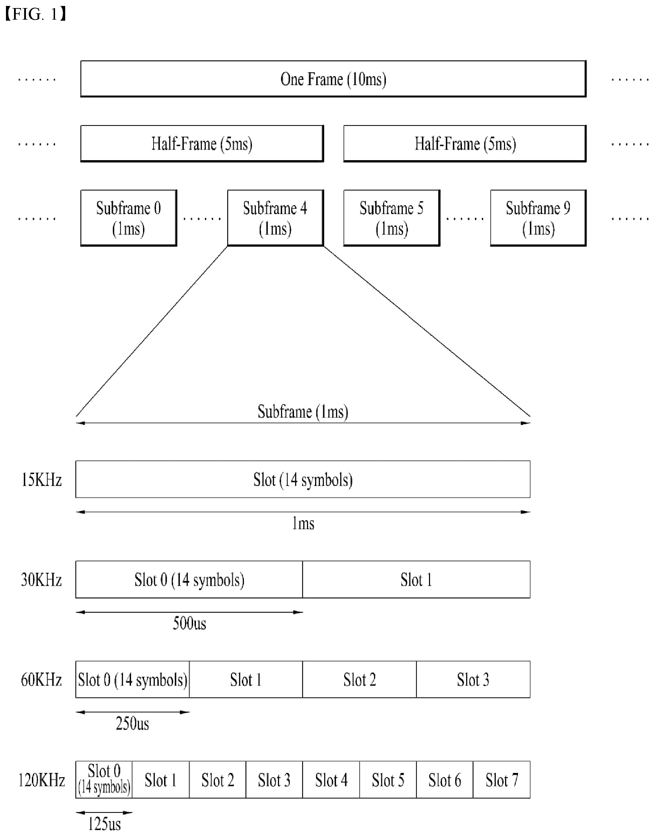

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

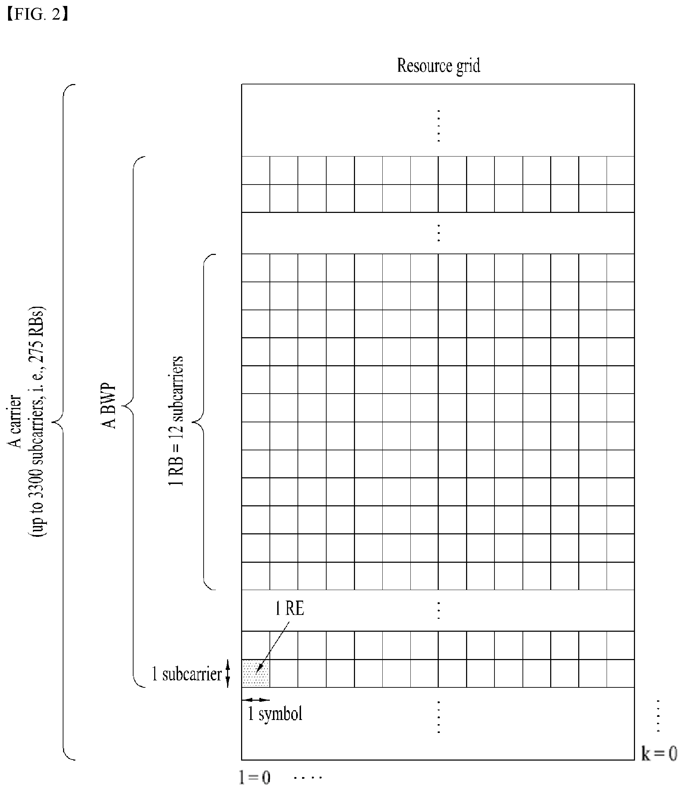

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

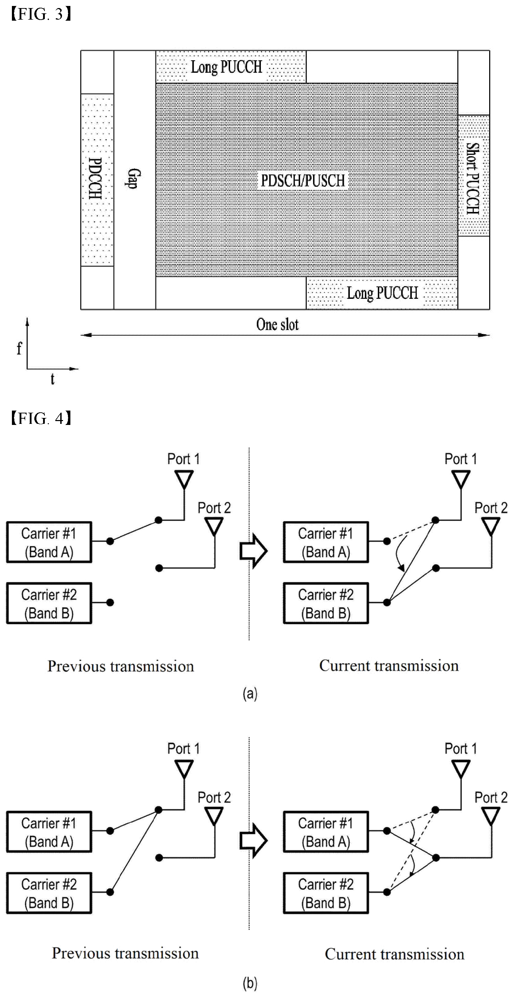

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

**[Table 4]**

| PUCCH format | Length in OFDM symbols ${N}_{symb}^{PUCCH}$ | Number of bits | Usage | Etc |
|---|---|---|---|---|
| 0 | 1 - 2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)
   - Supportable UCI payload size: up to K bits (e.g., K = 2)
   - Number of OFDM symbols included in one PUCCH: 1 to X symbols (e.g., X = 2)
   - Transmission structure: only a UCI signal is configured with no DM-RS, and a UCI state is transmitted by selecting and transmitting one of a plurality of sequences.
(1) PUCCH Format 1 (PF1)
   - Supportable UCI payload size: up to K bits (e.g., K = 2)
   - Number of OFDM symbols included in one PUCCH: Y to Z symbols (e.g., Y = 4 and Z = 14)
   - Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).
(2) PUCCH Format 2 (PF2)
   - Supportable UCI payload size: more than K bits (e.g., K = 2)
   - Number of OFDM symbols included in one PUCCH: 1 to X symbols(e.g., X = 2)
   - Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.
(3) PUCCH Format 3 (PF3)
   - Supportable UCI payload size: more than K bits (e.g., K = 2)
   - Number of OFDM symbols included in one PUCCH: Y to Z symbols (e.g., Y = 4 and Z = 14)
   - Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.
(4) PUCCH Format 4 (PF4 or F4)
   - Supportable UCI payload size: more than K bits (e.g., K = 2)
   - Number of OFDM symbols included in one PUCCH: Y to Z symbols (e.g., Y = 4 and Z = 14)
   - Transmission structure: UCI and a DMRS are configured/mapped in/to different symbols based on TDM. The DFT is applied to encoded UCI bits with no multiplexing between UEs.

### Uplink switching with 3 or 4 uplink bands

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/indicated to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap NTx1-Tx2. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementaryUplink, the switching gap may be present under certain conditions.

When UL switching is triggered for UL transmission starting at T0, which is after T0 - Toffset, the UE is not expected to cancel the UL switching, or to trigger any other new UL switching that occurs before T0 for any other UL transmission scheduled after T0 - Toffset, where Toffset may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with uUL = max(uUL,1, uUL,2), where uUL,1 corresponds to a subcarrier spacing of an active UL BWP of one UL carrier before the switching gap and uUL,2 corresponds to the subcarrier spacing of the active UL BWP of another UL carrier after the switching gap.

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.
- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.
   ▪ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.
   ▪ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.
- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

In some implementations of the present disclosure described below, "band(s) involved in UL Tx switching" may refer to switch-from band(s) and/or switch-to band(s) in a specific UL Tx switching operation. In this case, the switch-from band(s) refers to band(s) in which a Tx chain is located (or connected) prior to the switching when the Tx chain is switched from specific band(s) to another specific band(s) due to the UL Tx switching, and the switch-to band(s) refers to band(s) in which the Tx chain is located (or connected) after the switching.

In the following proposals, a "deactivated band" may refer to a case where all cells (or SCells or carriers) belonging to a specific UL band are deactivated, or a case where all cells (or SCells or carriers) belonging to a specific UL band are in a dormant state, or a case where all cells (or SCells or carriers) belonging to a specific UL band are either deactivated cells or dormant cells. Further, an "activated band" may refer to a band that is not a deactivated band. The activated/deactivated or dormant/non-dormant state of a cell (or SCell or carrier) may be configured/indicated by a medium access control-control element (MAC-CE) command or DCI.

In the following proposals, a "switching period length" refers to a period during which a UL transmission may be dropped in some (or all) of bands involved in specific UL Tx switching. This refers to the UL switching gap in section 6.1.6 of 3GPP TS 38.214.

In the following proposals, a "switching period location" indicates a band in which the UL switching gap is located among the bands involved in the specific UL Tx switching.

In the following proposals, a method for determining a switching period location may be performed based on the priority (configured by RRC or the like) of each UL band (i.e., priority-based location determination). That is, this refers to a method for determining a switching period location such that a switching period is not located in a highest-priority band after pre-assigning a priority to each of UL bands configured with UL Tx switching (through RRC). For example, when Tx switching is triggered, if a band having a highest priority among the "bands involved in the UL Tx switching" is a switch-from band (or switch-to band), a switching period location may be determined as a switch-to band (or switch-from band). More specifically, (for example) the operation may be performed as follows.

In the case of UL switching, a UE determines a band corresponding to a switching period location according to the priorities of configured bands as defined in 3GPP TS 38.101-1, and the priority of each band is provided by a higher-layer parameter [BandPriorityList]. The switching period is located in one of the following.
- For a UE for which a UL Tx switching option uplinkTxSwitchingOption is set to 'switchedUL',
   ▪ Switch-from band(s), when a band with a highest priority among the bands with transmissions before and after the switching is a switch-to band, or
   ▪ Switch-to band(s), when the band with the highest priority among the bands with transmissions before and after the switching is a switch-from band.
- For a UE for which the UL Tx switching option is set to 'dualUL' in one of the switch-from or switch-to bands,
   ▪ Switch-from band(s), when a band with a highest priority is a switch-to band, or
   ▪ Switch-to band(s), when the band with the highest priority is a switch-from band.

In this case, when a specific band belongs to both a switch-from band and a switch-to band, the band may not be considered during the location determination.

The RRC parameter uplinkTxSwitchingOption provided to the UE by the BS may indicate which option is configured for dynamic UL Tx switching for inter-band UL CA or (NG)EN-DC. This RRC parameter is set to 'switchedUL' when the network configures Option 1, and to 'dualUL' when the network configures Option 2. When the RRC value is set to "switchedUL" for the UE, the UE does not expect/perform connection of one Tx chain to each of two corresponding bands, or even if one Tx chain is connected to each of the bands, the UE does not expect/perform (indication/configuration of) simultaneous transmission in the two bands. Hereinafter, this is expressed as configuration of an Option 1 operation. For example, a UE configured with switchedUL does not expect simultaneous transmission of A(1T) and B(1T) to be indicated/configured, and the BS will not indicate/configure simultaneous transmission of A(1T) and B(1T) to/for the UE. When the RRC value is set to "dualUL" for the UE, the UE may expect to be scheduled/configured for (or may perform) simultaneous transmission in the two bands through the Tx chains respectively connected to the two bands. Hereinafter, this is expressed as configuration of an Option 2 operation.

In the present disclosure, the terms Tx chain and Tx may be replaced with transmission antenna connector, transmitter, or transmission chain.

In the following proposals, a case where one of switch-to bands is a deactivated band may include a case of an associated band (which is not a case where a UL transmission is scheduled through a UL grant or configured by a higher layer in the band). For example, when a 1P UL transmission occurs in a band C while the switch-from bands are in an A(1T)+B(1T) state (or A(2T) state), if a band D is a band associated with the band C (configured through RRC or the like), the switch-to bands of corresponding Tx switching may be C(1T)+D(1T). The proposed methods described below may be characteristically applied to this case.

In the descriptions below, the following expressions may be used (assuming four bands A, B, C, and D).
- $gap \left(A, B\right) = switching period reported for band pair \left\{A, B\right\}$
- $gap \left(A, C\right) = switching period reported for band pair \left\{A, C\right\}$
- $gap \left(A, D\right) = switching period reported for band pair \left\{A, D\right\}$
- $gap \left(B, C\right) = switching period reported for band pair \left\{B, C\right\}$
- $gap \left(B, D\right) = switching period reported for band pair \left\{B, D\right\}$
- $gap \left(C, D\right) = switching period reported for band pair \left\{C, D\right\}$
- $P \left(A\right) = priority assigned to band A$
- $P \left(B\right) = priority assigned to band B$
- $P \left(C\right) = priority assigned to band C$
- $P \left(D\right) = priority assigned to band D$

Each of the following proposals may be applied based on a reported UE capability (optional/for an advanced UE) or an RRC configuration based on the UE capability.

### [1] Method for Determining Switching Period Length

[1-1] When one or more of band(s) involved in specific UL Tx switching are deactivated band(s), a switching period length for the Tx switching may be determined by considering only the remaining bands (or band pairs) excluding the deactivated band(s).
   - Embodiment 1: In the case where bands involved in Tx switching are bands {A, B, C, D}, when the band A is a deactivated band, a switching period length may be determined using only {B, C, D}. Alternatively, when the band A and the band B are deactivated bands, the switching period length may be determined using only {C, D}. For example,
      ▪ For switching of A(1T)+B(1T) → C(1T)+D(1T),
         ◆ When A is a deactivated band, the switching period length is max{gap(B,C), gap(B,D)}.
         ◆ When C is a deactivated band, the switching period length is max{gap(A,D), gap(B,D)}.
         ◆ When both A and C are deactivated bands, the switching period length is gap(B,D).
         ◆ For reference, when there are no deactivated bands, the switching period length may be max{gap(A,C), gap(A,D), gap(B,C), gap(B,D)}.
   - Embodiment 2: In the case where band(s) involved in Tx switching are bands {A, B, C}, when the band A is a deactivated band, a switching period length may be determined using only {B, C}. For example,
      ▪ Fore switching of A(1T)+B(1T) → C(2T) or C(2T) → A(1T)+B(1T),
         ◆ When there are no deactivated bands, the switching period length is max{gap(A,C), gap(B,C)}.
         ◆ When A is a deactivated band, the switching period length is gap(B,C).
      ▪ For switching of A(1T)+B(1T) → A(1T)+C(1T),
         ◆ When there are no deactivated bands, the switching period length is gap(B,C) or max{gap(A,C),gap(A,B)}.
         ◆ When A is a deactivated band, the switching period length is gap(B,C).
         ◆ When B is a deactivated band, the switching period length is gap(A,C).
         ◆ When C is a deactivated band, the switching period length is gap(A,B).
[1-2] For [1-1] described above, it may be assumed that a case where all of the switch-from bands or all of the switch-to bands are deactivated band(s) does not occur.

### [2] Method for Determining Switching Period Location

[2-1] When one or more of band(s) involved in specific UL Tx switching are deactivated band(s), a switching period location for the Tx switching may be determined by considering only the remaining bands (or band pairs) excluding the deactivated band(s).
   - Embodiment 1: In the case where bands involved in Tx switching are bands {A, B, C, D}, when the band A is a deactivated band, a switching period location may be determined using only {B, C, D}. Alternatively, when the band A and the band B are deactivated bands, the switching period location may be determined using only {C, D}. For example,
      ▪ For switching of A(1T)+B(1T) → C(1T)+D(1T),
         ◆ When there are no deactivated bands, if max{P(A),P(B)}>max{P(C),P(D)}, the switching period location is determined as the bands C and D, and if max{P(A),P(B)}<max{P(C),P(D)}, the switching period location is determined as the bands A and B.
         ◆ When A is a deactivated band, if P(B)>max{P(C),P(D)}, the switching period location is determined as the bands C and D, and if P(B)<max{P(C),P(D)}, the switching period location is determined as the bands A and B.
         ◆ When C is a deactivated band, if max{P(A),P(B)}>P(D), the switching period location is determined as the bands C and D, and if max{P(A),P(B)}<P(D), the switching period location is determined as the bands A and B.
         ◆ When both A and C are deactivated bands, if P(B) > P(D), the switching period location is determined as the bands C and D, and if P(B) < P(D), the switching period location is determined as the bands A and B.
   - Embodiment 2: In the case where the band(s) involved in Tx switching are bands {A, B, C}, when the band A is a deactivated band, a switching period location may be determined using only {B, C}. For example,
      ▪ For switching of A(1T)+B(1T) → C(2T) or C(2T) → A(1T)+B(1T),
         ◆ When there are no deactivated bands: if max{P(A),P(B)}>P(C), the switching period location is determined as the band C, and if max{P(A),P(B)}<P(C), the switching period location is determined as the bands A and B.
         ◆ When A is a deactivated band, if P(B) > P(C), the switching period location is determined as the band C, and if P(B) < P(C), the switching period location is determined as the bands A and B.
      ▪ For switching of A(1T)+B(1T) → A(1T)+C(1T),
         ◆ When there are no deactivated bands, if P(B) > P(C), the switching period location is determined as the bands A and C, and if P(B) < P(C), the switching period location is determined as the bands A and B.
         ◆ When A is a deactivated band, if P(B) > P(C), the switching period location is determined as the bands A and C, and if P(B) < P(C), the switching period location is determined as the bands A and B.
         ◆ When B is a deactivated band, if P(A) > P(C), the switching period location is determined as the bands A and C, and if P(A) < P(C), the switching period location is determined as the bands A and B.
         ◆ When C is a deactivated band, if P(A) > P(B), the switching period location is determined as the bands A and B, and if P(A) < P(B), the switching period location is determined as the bands A and C.
[2-2] For [2-1] described above, the UE may assume that a case where all of the switch-from bands or all of the switch-to bands are deactivated band(s) does not occur. Alternatively, when all of the switch-from bands or all of the switch-to bands are deactivated band(s), the switching period location may be determined as a switch-from band or switch-to band including a deactivated band.
   - Embodiment 1:
      ▪ For switching of A(1T)+B(1T) → C(1T)+D(1T),
         ◆ When A and B are deactivated bands, the switching period location is determined as the bands A and B.
         ◆ When C and D are deactivated bands, the switching period location is determined as the bands C and D.
   - Embodiment 2:
      ▪ For switching of A(1T)+B(1T) → C(2T) or C(2T) → A(1T)+B(1T),
         ◆ When A and B are deactivated bands, the switching period location is determined as the bands A and B.
         ◆ When C is a deactivated band, the switching period location is determined as the band C.
   - Embodiment 3:
      ▪ For switching of A(1T)+B(1T) → A(1T)+C(1T),
         ◆ When B is a deactivated band, the switching period location is determined as the bands A and B.
         ◆ When C is a deactivated band, the switching period location is determined as the bands A and C.
   - Embodiment 4:
      ▪ For switching of A(2T) → B(2T),
         ◆ When A is a deactivated band, the switching period location is determined as the band A.
         ◆ When B is a deactivated band, the switching period location is determined as the band B.
[2-3] For [2-1] and [2-2] described above, a switching period location for Tx switching may be determined by regarding the priority of a deactivated band as a lowest priority. For example, when the priorities of the bands {A, B, C, D are assigned as A > B > C > D, if the band C is a deactivated band at the time specific Tx switching is triggered, the priorities of the bands may be regarded as A > B > D > C (or A > B > C = D) when determining the switching period location.
[3] Method for processing deactivated band(s) when determining switching period length and/or switching period location
[3-1] When one or more of bands involved in specific UL Tx switching are deactivated band(s), the deactivated band(s) may be maintained without being excluded from the bands involved in the Tx switching.
   - For example, when switch-from bands are A(1T)+B(1T) or A(2T), if a 1-port UL transmission occurs in the band C (scheduled through a UL grant or configured by a higher layer), and an associated band configured for the band C (through RRC or the like) is the band D, switch-to bands of the switching may be C(1T)+D(1T) even if the band D changes to a deactivated band.
   - In another example, for switching of A(1T)+B(1T) → C(2T) or C(2T) → A(1T)+B(1T), even if one or more of A, B, and C are deactivated bands, the switch-from bands and switch-to bands of the Tx switching may remain the same.

In this case, the method for determining a switching period length described in [1] and/or the method for determining a switching period location described in [2] may be applied as one of the following.
- Method 1:
   ▪ A switching period length is determined by including a deactivated band.
   ▪ A switching period location is determined by including the deactivated band.
      ◆ Alternatively, when determining the switching period location, the priority of the deactivated band is determined by applying the method of [2-3].
   - Method 2:
      ▪ A switching period length is determined by including a deactivated band.
      ▪ A switching period location is determined by excluding the deactivated band (as proposed in [2]).
   - Method 3:
      ▪ A switching period length is determined by excluding a deactivated band (as proposed in [1]).
      ▪ A switching period location is determined by including the deactivated band.
         ◆ Alternatively, when the switching period location is determined, the priority of the deactivated band is determined by applying the method of [2-3].
   - Method 4:
      ▪ A switching period length is determined by excluding a deactivated band.
      ▪ A switching period location is determined by excluding the deactivated band.

[3-2] When one or more of bands involved in specific UL Tx switching (or one or more of switch-to bands) are deactivated band(s), the deactivated band(s) may be excluded from the bands involved in the Tx switching.
- For example, when switch-from bands are A(1T)+B(1T) or A(2T), if a 1-port UL transmission occurs in the band C (scheduled through a UL grant or configured by a higher layer), and an associated band configured for the band C (through RRC or the like) is the band D, the switch-to bands of the switching may be C(1T)+D(1T). However, when the band D is a deactivated band, the switch-to bands may be C(2T). That is, when a band (=band Y) configured as an associated band for a specific band (=band X) is a deactivated band, it may operate as if no associated band is configured for the band X. In other words, when a 1-port UL occurs in the band X but the band Y is a deactivated band, it may operate as if 'twoT' is configured even if 'oneT' is configured for the corresponding band combination by an RRC parameter uplinkTxSwitching-DualUL-TxState, identical to a case where no associated band is configured for the band X.

In this case, the method for determining a switching period length described in [1] and/or the method for determining a switching period location described in [2] may be applied as one of the following.
- Method 1:
   ▪ A switching period length is determined by including a deactivated band.
   ▪ A switching period location is determined by including the deactivated band.
      ◆ Alternatively, when the switching period location is determined, the priority of the deactivated band is determined by applying the method of [2-3].
- Method 2:
   ▪ A switching period length is determined by including a deactivated band.
   ▪ A switching period location is determined by excluding the deactivated band (as proposed in [2]).
- Method 3:
   ▪ A switching period length is determined by excluding a deactivated band (as proposed in [1]).
   ▪ A switching period location is determined by including the deactivated band.
      ◆ Alternatively, when the switching period location is determined, the priority of the deactivated band is determined by applying the method of [2-3].
- Method 4:
   ▪ A switching period length is determined by excluding a deactivated band.
   ▪ A switching period location is determined by excluding the deactivated band.

[4] Method for switching Tx chain located in deactivated band(s) to another band, when one or more bands involved in UL Tx switching are deactivated band(s)
[4-1] When one or more bands involved in specific UL Tx switching are deactivated band(s), a Tx chain located in the deactivated band(s) may be switched to one of activated band(s) (even if a UL transmission is not scheduled/configured by a UL grant or a higher layer). In the present disclosure, the switching in 4-1 may be referred to as implicit switching.
[4-2] Regarding the implicit switching, the band to which the Tx chain in the deactivated band is to be switched may be determined using one of the following methods.
   - Method 1: The Tx chain in the deactivated band may be switched to a band having a highest priority among the bands configured for the UL Tx switching.
      ▪ When both Tx chains are located in the deactivated band, both Tx chains may be switched to the band having the highest priority.
      ▪ When one Tx chain (=Tx chain #1) is located in the deactivated band and the other one Tx chain (=Tx chain #2) is located in another band, only the Tx chain in the deactivated band may be switched to the band having the highest priority.
         ◆ Alternatively, (in this case, if the band having the highest priority and the band in which Tx chain #2 is located are configured with switchedUL), both Tx chains may be switched to the band having the highest priority.
   - Method 2: The band to which the Tx chain in the deactivated band is to be switched may be configured through RRC.
   - Method 3: The band to which the Tx chain located in the deactivated band is to be switched may be configured/indicated through a MAC-CE (or DCI) for triggering deactivation.
      ▪ When one Tx chain (=Tx chain #1) is located in the deactivated band and the other one Tx chain (=Tx chain #2) is located in another band, whether only Tx chain #1 is to be switched or both Tx chains #1 and #2 are to be switched may also be configured/indicated.
      ▪ The MAC-CE may refer to a MAC-CE for configuring/indicating SCell deactivation or SCell dormancy, and the DCI may refer to a DCI indicating SCell dormancy.
[4-3] Regarding implicit switching, when the Tx chain in the deactivated band (=band #X) is switched to another band (=band #Y), a switching period length reported for the band pair {band #X, band #Y} may be applied as a switching period length for the switching.

When two Tx chains are both switched to a specific different band (=band #3) while one Tx chain is located in the deactivated band (=band #1) and the other Tx chain is located in another band (=band #2), the switching period length may be determined as a larger value between a switching period length for a band pair {band #1, band #3} and a switching period length for a band pair {band #2, band #3}.

[4-4] Regarding the implicit switching, when the Tx chain in the deactivated band (=band #X) is switched to another band (=band #Y), the switching period location for the switching may be determined as the deactivated band.

When the two Tx chains are switched to a specific different band (=band #3) while one Tx chain is located in a deactivated band (=band #1) and the other Tx chain is located in another band (=band #2), the switching period location may be determined as band #1 and band #2.

[4-5] Regarding the implicit switching, a time (=T1) at which the Tx chain in the deactivated band is switched may be an earliest UL slot or UL symbol following an (application) delay required for an SCell (de)activation or SCell dormancy operation through a MAC-CE or DCI as defined in the legacy NR.

When a UL transmission occurs due to a UL grant or a higher-layer configuration prior to the time T1 (and after a reception time of the MAC-CE or DCI for the deactivation), and thus (new) UL Tx switching is triggered, the implicit switching may be canceled.

Alternatively, once the implicit switching is triggered, the new UL Tx switching (through the UL grant or higher-layer configuration) may not occur until the Tx chain in the deactivated band is completely switched to the other band. That is, the UE may expect this, and when there is a UL grant or higher-layer configuration that may trigger new Tx switching under this condition, the UE may drop it.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

### Implementation example

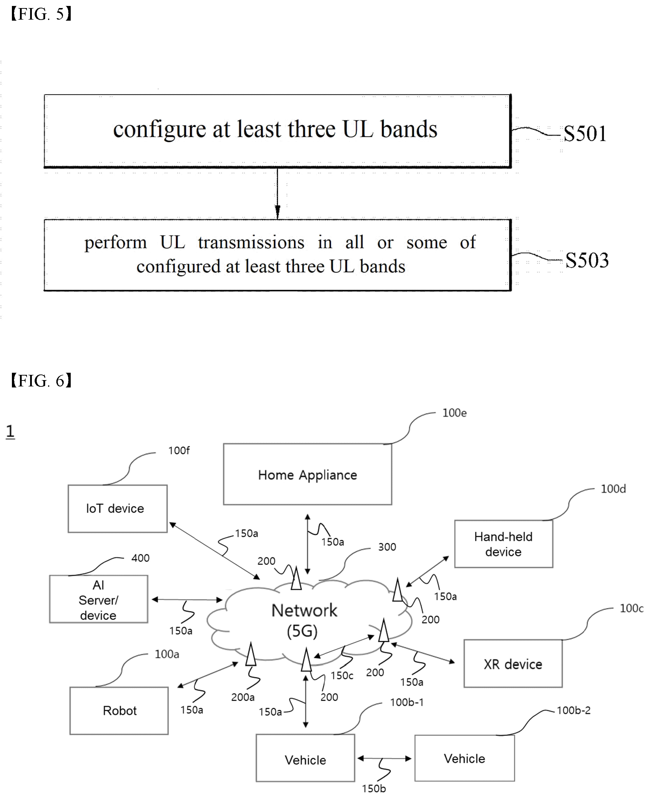

FIG. 5 is a flowchart of a signal transmission and reception method according to embodiments of the present disclosure.

Referring to FIG. 5, the signal transmission/reception method according to an embodiment of the present disclosure may be performed by a UE and configured to include configuring at least three UL bands (S501), and performing UL transmissions in all or some of the at least three UL bands (S503). A signal transmission/reception method by a BS corresponding to the embodiment of the present disclosure in FIG. 5 may be configured to include configuring at least three UL bands for a UE (S501), and receiving UL transmissions in all or some of the at least three UL bands from the UE (S503).

As described before, embodiments of the present disclosure relate to UL transmissions and UL switching that occur among three or four UL bands. When a UL transmission occurs on all or some of the three or four UL bands, one or more of two Tx chains are switched from one or two switch-from bands to one or two switch-to bands.

In relation to one UL switching, although a UL transmission may occur in the switch-from band(s), the switch-from band(s) may be in a state in which they are capable of supporting a UL transmission (a state where a Tx chain is located) without scheduling of a UL transmission. A UL transmission is scheduled in at least one of the switch-to band(s).

Regarding UL bands associated with one UL switching, switching period lengths for combinable UL band pairs may be reported as a UE capability. Based on the reported switching period lengths and the priority for each UL band, the location and length of a switching period in which a UL transmission is actually skipped may be determined. A switching period determined by the methods in sections [1] to [4] may be referred to as a switching gap.

In the present disclosure, when it is said that a specific band among bands associated with UL switching is deactivated, this implies that all cells belonging to the specific band are deactivated cells or dormant cells. Accordingly, when it is said that a specific band is activated, this implies that at least one cell belonging to the specific band is neither a deactivated cell nor a dormant cell.

Referring to section [1], when specific band(s) among bands involved in UL switching is deactivated, the length of a switching period (switching gap) may be determined as the length of a longest switching period among switching periods of respective band pairs reported as a UE capability, excluding switching periods associated with the specific band(s). For specific examples based on the number of bands and the location of a deactivated band, reference may be made to Embodiments 1 and 2 of section [1].

Referring to section [2-1], when specific band(s) among bands involved in UL switching is deactivated, the location of a switching period (switching gap) may be determined based on a band with a highest priority among the band(s) involved in the UL switching, excluding the deactivated specific band(s). Specifically, when the location of the band with the highest priority is one of a switch-from band and a switch-to band, the location of the switching gap may be determined as a band where the band with the highest priority is not located out of the switch-from band and the switch-to band. For specific examples based on the number of bands and the location of a deactivated band, reference may be made to Embodiments 1 and 2 of section [2-1].

Referring to section [2-2], when specific band(s) among bands involved in UL switching is deactivated, the location of a switching period (switching gap) may be determined based on a band with a highest priority among the remaining bands in a state where the priority(ies) of the deactivated specific band(s) among the band(s) involved in the uplink switching is regarded as a lowest priority. Specifically, when the location of the band with the highest priority is one of a switch-from band and a switch-to band, the location of the switching gap may be determined as a band where the band with the highest priority is not located out of the switch-from band and the switch-to band. For specific examples based on the number of bands and the location of a deactivated band, reference may be made to Embodiments 1 to 4 of section [2-2].

In [2-1] and [2-2], when the priorities of UL bands are changed due to deactivated specific band(s), there is a possibility that the location of a switching gap is changed compared to a case where there is no deactivated specific band.

Referring to section [4], when specific band(s) among bands involved in UL switching is deactivated, even if a UL transmission is not scheduled in the at least three UL bands, the UL switching is triggered so that Tx chain(s) located in the deactivated specific band(s) may be switched to activated band(s). The Tx chain may be switched to a band assigned a highest priority among the bands involved in the UL switching, or may be switched to a band indicated by DCI or a MAC-CE.

In addition to the operations described with respect to FIG. 5, one or more of the operations described with respect to FIGS. 1 to 4 and/or the operations described in sections [1] to [3] may be additionally performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

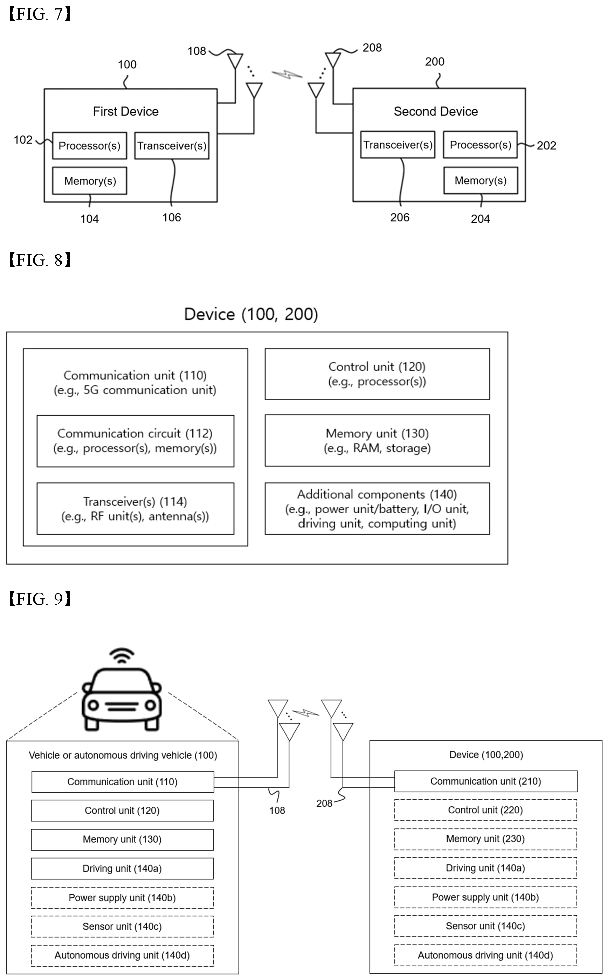

FIG. 8 illustrates a communication system 1 applied to the present disclosure.

Referring to FIG. 8, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 9 illustrates wireless devices applicable to the present disclosure.

Referring to FIG. 9, a first wireless device 100 and a second wireless device 200 may transmit wireless signals through a variety of RATs (e.g., LTE and NR). {The first wireless device 100 and the second wireless device 200 may correspond to {the wireless device 100x and the BS 200 and/or {the wireless device 100x and the wireless device 100x of FIG. 8.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 10 illustrates another example of a wireless device applied to the present disclosure. The wireless device may be implemented in various forms according to a use case/service (refer to FIG. 8).

Referring to FIG. 10, wireless devices 100 and 200 may correspond to the wireless devices 100 and 200 of FIG. 9 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcasting terminal, a hologram device, a public safety device, an MTC device, a medical device, a FinTech device (or a finance device), a security device, a climate/environment device, the AI server/device (400 of FIG. 8), the BSs (200 of FIG. 8), a network node, or the like. The wireless device may be mobile or fixed according to a use case/service.

In FIG. 10, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 11 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method performed by a user equipment (UE) in a wireless communication system, the method comprising:
configuring at least three uplink (UL) bands; and
performing UL transmissions in all or some of the at least three UL bands,
wherein UL switching is triggered based on the UL transmissions, and a UL transmission is dropped during a UL switching gap associated with the UL switching, and
wherein based on specific band(s) among the at least three UL bands being deactivated, a length of the switching gap of the UL switching is determined as a length of a longest switching period among switching periods of respective band pairs reported as a UE capability, excluding switching period(s) associated with the specific band(s).

2. The method of claim 1, wherein based on the specific band(s) among the at least three UL bands being deactivated, a location of the switching gap of the UL switching is determined not to be in a band having a highest priority among the at least three UL bands excluding the specific band(s).

3. The method of claim 1, wherein based on the specific band(s) among the at least three UL bands being deactivated, priority(ies) of the specific band(s) is considered to be lowest among the at least three UL bands, and a location of the switching gap of the UL switching is determined not to be in a band having a highest priority among the at least three UL bands.

4. The method of claim 1, wherein based on the specific band(s) among the at least three UL bands being deactivated and a UL transmission not being scheduled in the at least three UL bands, transmission (Tx) chain(s) located in the specific band(s) is switched to activated band(s) among the at least three UL bands.

5. The method of claim 4, wherein the Tx chain is switched to a band assigned a highest priority among the activated band(s).

6. The method of claim 4, wherein the Tx chain is switched to a band indicated by downlink control information (DCI) or a medium access control-control element (MAC-CE) for deactivation or dormancy of all cells belonging to the specific band(s) among the activated band(s).

7. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform specific operations,
wherein the specific operations include:
configuring at least three uplink (UL) bands; and
performing UL transmissions in all or some of the at least three UL bands,
wherein UL switching is triggered based on the UL transmissions, and a UL transmission is dropped during a UL switching gap associated with the UL switching, and
wherein based on specific band(s) among the at least three UL bands being deactivated, a length of the switching gap of the UL switching is determined as a length of a longest switching period among switching periods of respective band pairs reported as a UE capability, excluding switching period(s) associated with the specific band(s).

8. The UE of claim 7, wherein based on the specific band(s) among the at least three UL bands being deactivated, a location of the switching gap of the UL switching is determined not to be in a band having a highest priority among the at least three UL bands excluding the specific band(s).

9. The UE of claim 7, wherein based on the specific band(s) among the at least three UL bands being deactivated, priority(ies) of the specific band(s) is considered to be lowest among the at least three UL bands, and a location of the switching gap of the UL switching is determined not to be in a band having a highest priority among the at least three UL bands.

10. The UE of claim 7, wherein based on the specific band(s) among the at least three UL bands being deactivated and a UL transmission not being scheduled in the at least three UL bands, transmission (Tx) chain(s) located in the specific band(s) is switched to activated band(s) among the at least three UL bands.

11. The UE of claim 10, wherein the Tx chain is switched to a band assigned a highest priority among the activated band(s).

12. The UE of claim 10, wherein the Tx chain is switched to a band indicated by downlink control information (DCI) or a medium access control-control element (MAC-CE) for deactivation or dormancy of all cells belonging to the specific band(s) among the activated band(s).

13. An apparatus for a user equipment (UE), comprising:
at least one processor; and
at least one memory operably connected to the at least one processor and storing instructions that, when executed, cause the at least one processor to perform operations,
wherein the operations include:
configuring at least three uplink (UL) bands; and
performing UL transmissions in all or some of the at least three UL bands,
wherein UL switching is triggered based on the UL transmissions, and a UL transmission is dropped during a UL switching gap associated with the UL switching, and
wherein based on specific band(s) among the at least three UL bands being deactivated, a length of the switching gap of the UL switching is determined as a length of a longest switching period among switching periods of respective band pairs reported as a UE capability, excluding switching period(s) associated with the specific band(s).

14. A non-transitory computer-readable storage medium including at least one computer program that causes a user equipment (UE) including at least one processor to perform operations,
wherein the operations include:
configuring at least three uplink (UL) bands; and
performing UL transmissions in all or some of the at least three UL bands,
wherein UL switching is triggered based on the UL transmissions, and a UL transmission is dropped during a UL switching gap associated with the UL switching, and
wherein based on specific band(s) among the at least three UL bands being deactivated, a length of the switching gap of the UL switching is determined as a length of a longest switching period among switching periods of respective band pairs reported as a UE capability, excluding switching period(s) associated with the specific band(s).
